# EUROPEAN PATENT APPLICATION

(11) **EP 4 773 610 A1**
(43) Date of publication of application: **08.07.2026**
(21) Application number: 25150003.9
(22) Date of filing: 02.01.2025
(51) Int. Cl.: H04N 19/597, G06T 17/00

(54) **ENCODING AND DECODING IMAGING DATA**

(71) Applicant: Koninklijke Philips N.V., 5656 AE Eindhoven (NL)
(72) Inventor: CHEN, Hongxin, 5656 AG Eindhoven (NL); GU, Hai, 5656 AG Eindhoven (NL); MA, Fu Long, 5656 AG Eindhoven (NL)
(74) Representative: Philips Intellectual Property & Standards

(57) **Abstract**

A bitstream, an encoder and method for encoding the bitstream, and a decoder and method for decoding the bitstream. The bitstream comprises one or more texture patches and one or more depth patches for each region in the scene that does not contain a non-Lambertian reflecting surface, one or more texture patches and one or more depth patches for any non-Lambertian reflecting surface in the scene, and at least one texture patch and at least one depth patch for each virtual object in any non-Lambertian reflecting surface. The one or more texture patches for any non-Lambertian reflecting surface and the at least one texture patch for each virtual object each comprises a color value and a density value for each pixel.

## Description

### FIELD OF THE INVENTION

The invention relates to the field of 3D imaging.

### BACKGROUND OF THE INVENTION

Six degree of freedom (6 DoF) immersive video allows a scene to be viewed from different positions and orientations. The creation of 6 DoF immersive video typically uses multiple cameras to acquire image frames of a scene from different viewpoints. The acquired image frames are used to generate an image frame at a new viewpoint. Various approaches are used for the synthesis of an image frame at a new viewpoint.

For instance, information from the acquired image frames of the scene may be encoded in an atlas-based format. This approach typically involves processing the acquired image frames to identify redundant regions; the redundant regions are then discarded, and the remaining regions, called "texture patches", are packed into an atlas. Corresponding regions of depth maps for the acquired image frames, called "depth patches", are packed into the same atlas or a separate atlas. The atlas(es) is/are encoded, along with associated metadata, into a bitstream. A device receiving the encoded atlas(es) and metadata is able to generate an image frame at a target viewpoint by using the metadata and depth patches to reconstruct the texture patches into an image frame at the target viewpoint.

This process relies on the assumption that objects in the scene have Lambertian (i.e. diffuse) reflective properties. Surfaces having non-Lambertian reflective properties (e.g. specularly reflecting surfaces) cannot be rendered to a different viewpoint using an image region of the surface from a single viewpoint, as the photometric appearance of such surfaces depends on the viewpoint.

### SUMMARY OF THE INVENTION

The invention is defined by the claims.

According to examples in accordance with an aspect of the invention, there is provided a method for encoding 3D imaging data for a scene, the method comprising: obtaining a set of 2D image frames for a scene, each image frame in the set having been acquired from a different viewpoint; processing the set of 2D image frames to generate a depth map for each 2D image frame; identifying any virtual objects in the scene; identifying, as a non-Lambertian reflecting surface, any surface in the scene in which one or more virtual objects are visible in at least one 2D image frame in the set; for each region in each of the 2D image frames that does not contain a non-Lambertian reflecting surface, generating one or more texture patches for the region and one or more corresponding depth patches for the region; for any identified non-Lambertian reflecting surface: generating one or more texture patches and one or more depth patches for the non-Lambertian reflecting surface, wherein the one or more texture patches contain a non-viewpoint-dependent appearance of the non-Lambertian reflecting surface and the one or more depth patches contain depth values for the non-Lambertian reflecting surface; for each virtual object that is visible in the non-Lambertian reflecting surface in at least one 2D image frame in the set, generating at least one texture patch and at least one depth patch for the virtual object, wherein the at least one texture patch contains an appearance of the virtual object and the at least one depth patch contains virtual depth values for the virtual object, wherein the one or more texture patches for the non-Lambertian reflecting surface and the at least one texture patch for each of the one or more virtual object each comprise a color value and a density value for each pixel; and encoding, into a bitstream, the one or more texture patches and one or more depth patches for each region that does not contain a non-Lambertian reflecting surface, the one or more texture patches and one or more depth patches for any identified non-Lambertian reflecting surface, and the at least one texture patch and at least one depth patch for each virtual object in any identified non-Lambertian reflecting surface.

The inventors have recognized that encoding texture and depth patches for virtual objects in reflections of non-Lambertian reflecting surfaces, in addition to texture and depth patches for real objects in the scene, allows non-Lambertian reflecting surfaces to be rendered realistically at a target viewpoint by a decoder receiving the bitstream. By including density as well as color in texture patches for non-Lambertian reflecting surfaces and virtual objects, a texture patch for a virtual object can be merged with the texture patch(es) for the non-Lambertian reflecting surface in which the virtual object is visible from a target viewpoint, to generate a realistic appearance of the non-Lambertian reflecting surface from the target viewpoint.

The use of texture and depth patches for virtual objects in reflections of non-Lambertian reflecting surfaces allows information enabling the reconstruction of view-dependent aspects of the scene to be transmitted efficiently.

In some examples, the method further comprises, for any identified non-Lambertian reflecting surface, processing a region of the depth map corresponding to the non-Lambertian reflecting surface to determine whether the surface has a non-zero curvature; for any identified non-Lambertian reflecting surface determined to have a non-zero curvature, the step of generating at least one texture patch and at least one depth patch for each virtual object visible in the non-Lambertian reflecting surface comprises generating at least one texture patch and a plurality of depth patches, each of the plurality of depth patches being associated with a respective viewing angle range; and the method further comprises encoding, into the bitstream, metadata comprising the viewing angle range associated with each depth patch for each virtual object visible in the reflection of any identified non-Lambertian reflecting surface determined to have a non-zero curvature.

The inventors have further recognized that a position of a virtual object with respect to a surface in which the virtual object appears changes depending on viewing angle if the surface is curved. Providing a plurality of depth patches for the virtual object for different viewing angles enables a realistic appearance of the reflection in the curved surface from a novel viewpoint.

In some examples, the at least one texture patch for each virtual object visible in the reflection of any identified non-Lambertian reflecting surface determined to have a non-zero curvature comprises a plurality of texture patches, each of the plurality of texture patches being associated with a respective one of the plurality of depth patches for the virtual object.

In some cases, the appearance of a virtual object reflected in a curved surface may also vary depending on the viewing angle. Providing a plurality of texture patches for the virtual object for different viewing angles provides a yet more realistic appearance of the reflection in the curved surface from a novel viewpoint.

In some examples, the step of identifying any virtual objects in the scene comprises processing the depth map generated for each 2D image frame to identify any virtual objects in the scene.

In some examples, the depth map for each 2D image frame is generated by: processing the set of 2D image frames to generate a radiance field model for the scene; and processing the radiance field model to generate the depth map for each 2D image frame.

In some examples, the radiance field model is a neural radiance field model.

In some examples, each 2D image frame in the set is part of a respective video sequence of the scene.

There is also provided a method for decoding 3D imaging data for a scene, the method comprising: receiving a bitstream comprising encoded 3D imaging data for a scene, the encoded 3D imaging data comprising: one or more texture patches and one or more depth patches for each region in the scene that does not contain a non-Lambertian reflecting surface; one or more texture patches and one or more depth patches for any non-Lambertian reflecting surface in the scene, and at least one texture patch and at least one depth patch for each virtual object in any non-Lambertian reflecting surface, wherein the one or more texture patches for any non-Lambertian reflecting surface and the at least one texture patch for each virtual object each comprise a color value and a density value for each pixel; and decoding the 3D imaging data.

In some examples, the method further comprises: defining a target viewpoint; processing the decoded 3D imaging data to determine a pixel value for each pixel of an image frame at the target viewpoint, wherein the pixel value for a pixel representing a point on a non-Lambertian reflecting surface is determined by merging a color value for the point on the non-Lambertian reflecting surface and a color value for a point on a virtual object that is visible in the point on the non-Lambertian reflecting surface from the target viewpoint.

In some examples, the color value for the point on the non-Lambertian reflecting surface and the color value for the point on the virtual object are merged by weighting each color value according to the corresponding density value.

In some examples, for at least one virtual object, the at least one depth patch comprises a plurality of depth patches; the bitstream further comprises encoded metadata comprising, for each virtual object for which the at least one depth patch comprises a plurality of depth patches, a viewing angle range associated with each depth patch for the virtual object; the method further comprises decoding the metadata; and the step of processing the decoded 3D imaging data to determine a pixel value for each pixel of an image frame at the target viewpoint comprises, for each virtual object for which the at least one depth patch comprises a plurality of depth patches, selecting one of the plurality of depth patches based on the viewing angle range associated with each depth patch.

There is also proposed a computer program product comprising computer program code means which, when executed on a computing device having a processing system, cause the processing system to perform all of the steps of any method described above.

According to examples in accordance with another aspect of the invention, there is provided an encoder for encoding 3D imaging data for a scene, the encoder being configured to: obtain a set of 2D image frames for a scene, each image frame in the set having been acquired from a different viewpoint; process the set of 2D image frames to generate a depth map for each 2D image frame; identify any virtual objects in the scene; identify, as a non-Lambertian reflecting surface, any surface in the scene in which one or more virtual objects are visible in at least one 2D image in the set; for each region in each of the 2D image frames that does not contain a non-Lambertian reflecting surface, generate one or more texture patches for the region and one or more corresponding depth patches for the region; for any identified non-Lambertian reflecting surface: generate one or more texture patches and one or more depth patches for the non-Lambertian reflecting surface, wherein the one or more texture patches contain a non-viewpoint-dependent appearance of the non-Lambertian reflecting surface and the one or more depth patches contain depth values for the non-Lambertian reflecting surface; for each virtual object that is visible in the non-Lambertian reflecting surface in at least one 2D image in the set, generate at least one texture patch and at least one depth patch for the virtual object, wherein the at least one texture patch contains an appearance of the virtual object and the at least one depth patch contains virtual depth values for the virtual object, wherein the one or more texture patches for the non-Lambertian reflecting surface and the at least one texture patch for each of the one or more virtual object each comprise a color value and a density value for each pixel; and encode, into a bitstream, the one or more texture patches and one or more depth patches for each region that does not contain a non-Lambertian reflecting surface, the one or more texture patches and one or more depth patches for any identified non-Lambertian reflecting surface, and the at least one texture patch and at least one depth patch for each virtual object in any identified non-Lambertian reflecting surface.

There is also provided a decoder for decoding 3D imaging data for a scene, the decoder being configured to: receive a bitstream comprising encoded 3D imaging data for a scene, the encoded 3D imaging data comprising: one or more texture patches and one or more depth patches for each region in the scene that does not contain a non-Lambertian reflecting surface; one or more texture patches and one or more depth patches for any non-Lambertian reflecting surface in the scene, and at least one texture patch and at least one depth patch for each virtual object in any non-Lambertian reflecting surface, wherein the one or more texture patches for any non-Lambertian reflecting surface and the at least one texture patch for each virtual object each comprise a color value and a density value for each pixel; and decode the 3D imaging data.

According to examples in accordance with yet another aspect of the invention, there is provided a bitstream comprising encoded 3D imaging data for a scene, the encoded 3D imaging data comprising: one or more texture patches and one or more depth patches for each region in the scene that does not contain a non-Lambertian reflecting surface; one or more texture patches and one or more depth patches for any non-Lambertian reflecting surface in the scene, and at least one texture patch and at least one depth patch for each virtual object in any non-Lambertian reflecting surface, wherein the one or more texture patches for any non-Lambertian reflecting surface and the at least one texture patch for each virtual object each comprise a color value and a density value for each pixel.

In some examples, for at least one virtual object, the at least one depth patch comprises a plurality of depth patches; and the bitstream further comprises encoded metadata comprising, for each virtual object for which the at least one depth patch comprises a plurality of depth patches, a viewing angle range associated with each depth patch for the virtual object.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a method for encoding 3D imaging data for a scene, according to an embodiment of the invention;
Fig. 2 illustrates specular reflection by a flat non-Lambertian reflecting surface;
Fig. 3 illustrates reflection by a curved non-Lambertian reflecting surface;
Fig. 4 illustrates a method for decoding 3D imaging data for a scene, according to an embodiment of the invention; and
Fig. 5 illustrates a pipeline for transmitting 3D imaging data for a scene.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a bitstream, an encoder and method for encoding the bitstream, and a decoder and method for decoding the bitstream. The bitstream comprises one or more texture patches and one or more depth patches for each region in the scene that does not contain a non-Lambertian reflecting surface, one or more texture patches and one or more depth patches for any non-Lambertian reflecting surface in the scene, and at least one texture patch and at least one depth patch for each virtual object in any non-Lambertian reflecting surface. The one or more texture patches for any non-Lambertian reflecting surface and the at least one texture patch for each virtual object each comprise a color value and a density value for each pixel.

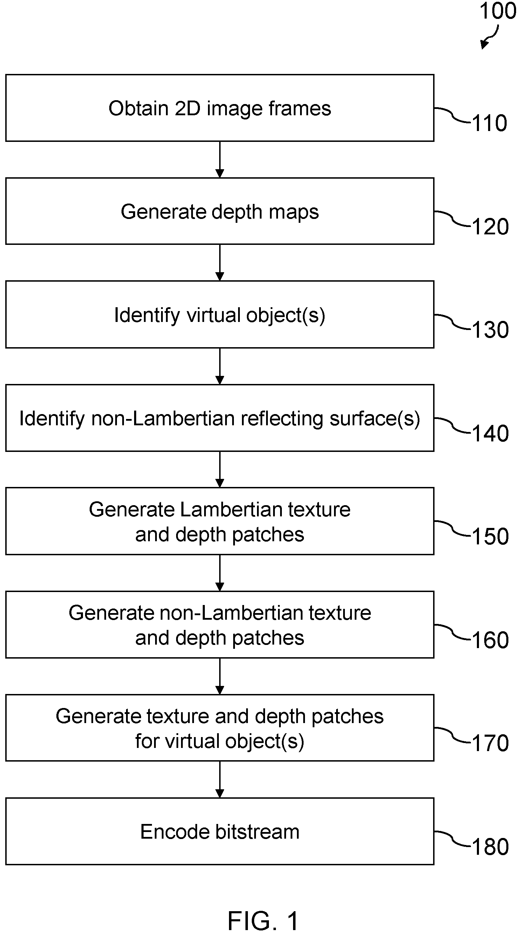

Fig. 1 illustrates a method 100 for encoding 3D imaging data for a scene, according to an embodiment of the invention.

The method 100 begins at step 110, at which a set of 2D image frames for a scene are obtained. Each 2D image frame in the set has been acquired by a different viewpoint, and thus provides a different view of the scene. The set of 2D image frames may have been acquired from a plurality of cameras, each having a different position and/or orientation. For instance, the set of 2D image frames may have been acquired from cameras provided in a linear array or a grid arrangement. The use of multiple cameras for immersive video applications is well known, and suitable numbers of and arrangements of the cameras for acquiring the plurality of 2D images will be readily apparent to the skilled person.

The set of 2D image frames may, for example, be obtained directly from the cameras that acquired the 2D image frames, or from another source storing the set of 2D image frames (e.g. a memory unit). In some examples, each 2D image frame in the set of 2D image frames may be a video frame forming part of a respective video sequence, and the method 100 may be performed for each set of 2D image frames in the video sequences (where a set of 2D image frames comprises a 2D image frame from each video sequence at a particular moment in time).

At step 120, the set of 2D image frames is processed to generate a depth map for each 2D image frame. The depth maps may have the same resolution as the 2D image frames, such that each pixel of a depth map provides a depth value of the corresponding pixel in the corresponding 2D image frame (i.e. a distance from the focal point of the camera that acquired the 2D image frame and the 3D position of the point in the scene represented by the pixel along the optical axis).

Any suitable depth estimation technique may be used to generate the depth maps. For instance, in some examples, the depth maps may be generated using feature matching techniques, in which corresponding pixels are identified in the set of 2D image frames, and triangulation is used to determine depth values for the corresponding pixels.

In some examples, the depth map for each 2D image may be generated using a radiance field model for the scene. A radiance field model is a volumetric representation of a scene that describes the interaction of light with objects in the scene. The set of 2D image frames may be processed to generate a radiance field model for the scene, and the radiance field model may then be processed to generate the depth map for each 2D image frame. The depth map for each 2D image frame may be generated by using the radiance field model to determine the position of each point in each 2D image frame within the scene, and determining the distance between the position of each point and the position of the camera that acquired the 2D image frame in which the point appears.

In some examples, the radiance field model may be a neural radiance field (NeRF) model. A neural radiance field model is a neural volume rendering model that outputs a color and density for a point in the scene based on an input of the 3D-coordinate for the point and a viewing direction. A neural radiance field model may be trained for the scene by generating a sampling ray for each pixel in each 2D image frame, defining a set of sampling points along each sampling ray, and training a neural radiance field model for the set of sampling points for each pixel using the color of each pixel as ground truth. In each iteration of the training process, the outputs of the neural radiance field model for each sampling point in the set of sampling points for each pixel are processed to determine a color value for each pixel. These color values are compared with the ground truth color values, and the coefficients of the neural radiance field model are adjusted to reduce a difference between the color values and the ground truth. See Mildenhall et al. (2020), "Nerf: Representing scenes as neural radiance fields for view synthesis", European Conference on Computer Vision 2020 for further details regarding the training of a neural radiance field model.

In some examples, the radiance field model may be an extension of a neural radiance field model (e.g. Ref-NeRF, Mip-NeRF, PixelNeRF, IBRNet, Instant NGP, etc.); suitable techniques for training such a radiance field model (and processing the radiance field model to generate a depth map for each 2D image frame in the set) will be apparent to the skilled person.

In some examples, the radiance field model may be a set of 3D Gaussian splats, the parameters of which are optimized to represent the scene. The generation of a set of 3G Gaussian splats to represent a scene from a set of 2D image frames of the scene is described in B. Kerbl et al. (2023), "3D Gaussian Splatting for Real-Time Radiance Field Rendering", ACM Transactions on Graphics, 42(4):139(1-14).

At step 130, any virtual objects in the scene are identified. A virtual object is an image of an object in the scene, formed by reflection in a non-Lambertian reflecting surface in the scene. In some examples, any virtual objects in the scene may be identified based on the depth maps for the set of 2D image frames; for instance, the depth values in the depth maps may be processed to identify which pixels in each 2D image frame are in the foreground and which pixels are behind the foreground. Any pixel that is behind the foreground but visible with the foreground may be identified as belonging to a virtual object. In other examples, a machine-learning algorithm, such as an object segmentation algorithm, trained to identify virtual objects in 2D image frames may be used to identify any virtual objects in the scene.

At step 140, any surface in the scene in which one or more virtual objects are visible in at least one 2D image frame in the set is identified as a non-Lambertian reflecting surface. A non-Lambertian reflecting surface is a surface that does not reflect light diffusely, resulting in a view-dependent appearance of the surface.

In the case of a highly specular (i.e. mirror-like) non-Lambertian reflecting surface, in which the non-Lambertian reflecting surface itself (i.e. rather than reflections in the surface) is not visible in any of the 2D image frames, virtual objects visible in the highly specular non-Lambertian reflecting surface may not be identified as virtual objects, and the highly specular non-Lambertian reflecting surface may not be identified as such. In this case, a virtual object visible in the highly specular non-Lambertian reflecting surface is treated as a real object having the position of the apparent position of the virtual object, and the actual surface of the highly specular non-Lambertian reflecting surface is treated as though it does not exist. As the highly specular non-Lambertian reflecting surface is not itself visible in images of the scene, this approach provides a realistic appearance for a region containing the highly specular non-Lambertian reflecting surface.

At step 150, one or more texture patches and one or more corresponding depth patches are generated for each region that does not contain a non-Lambertian reflecting surface (i.e. for each region that has not been identified as a non-Lambertian reflecting surface).

A texture patch for a region that does not contain a non-Lambertian reflecting surface provides at least color information for the region; for instance, each texture patch may be a portion of a 2D image frame in the set. In some examples, the texture patches for the regions that do not contain a non-Lambertian reflecting surface may also provide density information for the region. However, since the density for any region that does not contain a non-Lambertian reflecting surface will have the maximum density value, in some examples, the texture patches for the regions that do not contain a non-Lambertian reflecting surface may not include density information, and a decoder may be instructed that each pixel in any patch that does not include density information has a maximum density value.

Each corresponding depth patch comprises depth information for the region represented by the texture patch to which the depth patch corresponds. For instance, each depth patch may be a portion of the depth map corresponding to the 2D image frame from which the corresponding texture patch was generated.

When generating the texture and depth patches for each region that does not contain a non-Lambertian reflecting surface, a pruning technique may be applied, in order to reduce redundancies in the texture and depth patches for the regions that do not contain non-Lambertian reflecting surfaces. In this way, the majority of points in the scene that belong to Lambertian reflecting surfaces may be represented by only one texture patch and only one depth patch.

If any non-Lambertian reflecting surface has been identified in the set of 2D image frames, steps 160 and 170 are performed for each identified non-Lambertian reflecting surface.

At step 160, one or more texture patches and one or more depth patches are generated for the non-Lambertian reflecting surface. If the whole of non-Lambertian reflecting surface is captured by a single 2D image frame in the set, a single texture patch and single depth patch may be generated for the object; if more than one view is required to fully capture the non-Lambertian reflecting surface, more than one texture patch and more than one depth patch may be generated. The one or more texture patches provide a non-viewpoint-dependent appearance of the non-Lambertian reflecting surface, with each texture patch comprising a color value and a density value for each pixel in the texture patch, and the one or more depth patches contain depth values for the non-Lambertian reflecting surface.

The density value for each pixel in each texture patch for the non-Lambertian reflecting surface may be determined using a radiance field model. In examples in which a radiance field model for the scene was generated to generate the depth maps, the density values may be obtained from this radiance field model; in examples in which a different depth estimation technique is used, a radiance field model may be generated for at least any non-Lambertian reflecting surface in the scene and any virtual object visible in a non-Lambertian reflecting surface, and used to determine the density values.

The depth values for the non-Lambertian reflecting surface in the one or more depth patches may be determined by identifying, for each sub-region of the non-Lambertian reflecting surface, at least one 2D image frame in which the sub-region of the non-Lambertian reflecting surface is itself visible (i.e. at least one 2D image frame in which, due to the angle at which the 2D image frame was acquired, no virtual object appears in the sub-region of the non-Lambertian reflecting surface). The depth map for a 2D image frame in which a sub-region of the non-Lambertian reflecting surface is itself visible may be used to provide the depth values for the sub-region.

At step 170, at least one texture patch and at least one depth patch is generated for each virtual object that is visible in the non-Lambertian reflecting surface in at least one 2D image frame in the set. The at least one texture patch provides an appearance of the virtual object, with each texture patch comprising a color value and a density value for each pixel in the texture patch, and the at least one depth patch contains virtual depth values for the virtual object. The density value for each pixel in each texture patch for each virtual object may be determined using a radiance field model, as described above.

In some examples, prior to generating the texture and depth patches for each virtual object that is visible in the non-Lambertian reflecting surface, the method 100 may comprise a step of determining whether the non-Lambertian reflecting surface has a non-zero curvature (e.g. based on depth values for the non-Lambertian reflecting surface). This is based on the recognition that curved non-Lambertian reflecting surfaces have more complex view-dependent effects than flat non-Lambertian reflecting surfaces.

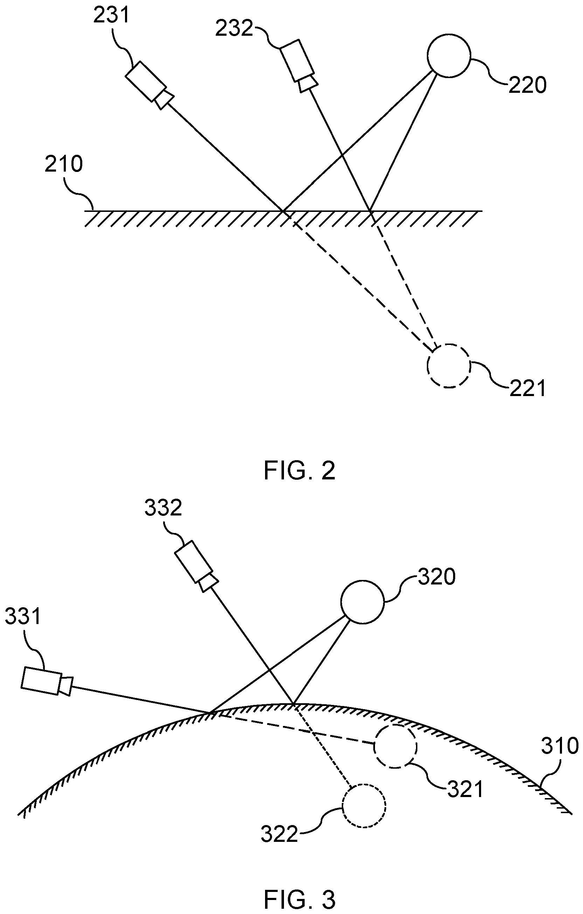

This principle is illustrated by Figs. 2 and 3. Fig. 2 illustrates specular reflection by a flat non-Lambertian reflecting surface 210. An object 220 in the scene is reflected in the flat non-Lambertian reflecting surface 210 as a virtual object 221. The apparent position of the virtual object 221 within the scene is the same from any viewpoint; for instance the virtual object 221 will appear to have the same position within the scene when captured by a first camera 231 at a first viewpoint as when captured by a second camera 232 at a second viewpoint. Thus, for each point on the virtual object, a single depth value may be used to describe the position of the point; this depth value will accurately describe the apparent position of the point on the virtual object for any viewpoint in which the virtual object is visible. The depth values for the virtual object may be provided in a single depth patch or across more than one depth patch; the number of depth patches used for the virtual object may depend on the number of texture patches used for the virtual object.

Similarly, the appearance of each point on the virtual object is the same from any viewpoint; thus, for each point on the virtual object, a single color value and a single density value may be used to describe appearance of the point. The texture information for the virtual object may be provided in a single texture patch or across more than one texture patch; more than one texture patch may be used, for example, where more than one 2D image frame is required to fully capture the appearance of the virtual object.

Fig. 3 illustrates reflection by a curved non-Lambertian reflecting surface 310. An object 320 in the scene is reflected by the curved non-Lambertian reflecting surface 310, and appears as a first instance 321 of a virtual object at first apparent position when the scene is captured by a first camera 331 at a first viewpoint, and a second instance 322 of the virtual object at a second apparent position when the scene is captured by a second camera 332 at a second viewpoint. Thus, the apparent position of the virtual object depends on the viewpoint (and in particular, on the viewing angle of the viewpoint). In order to accurately reconstruct the scene, each point on the virtual object requires different depth values for different viewing angles. In some cases, the appearance of each point on the virtual object may also vary depending on the viewing angle.

Returning to Fig. 1, if the method 100 comprises a step of determining whether the non-Lambertian reflecting surface has a non-zero curvature, the step 170 of generating at least one texture patch and at least one depth patch for each virtual object that is visible in the non-Lambertian reflecting surface may comprise, for any identified non-Lambertian reflecting surface that is determined to have a non-zero curvature, generating at least one texture patch and a plurality of depth patches, each of the plurality of depth patches being associated with a respective viewing angle range. For any identified non-Lambertian reflecting surface that is determined to have a curvature of zero, a single texture patch and a single depth patch may be generated for each virtual object (or each region of each virtual object) visible in the flat non-Lambertian reflecting surface.

The number of depth patches for a virtual object in a curved non-Lambertian reflecting surface may depend on an amount of variation in the depth of the virtual object across the range of viewing angles covered by the set of 2D image frames. For instance, if a difference in depth values for the virtual object between a depth map for a first 2D image frame in the set and a depth map for a second 2D image frame in the set is greater than a predetermined depth difference threshold, the plurality of depth patches for the virtual object may include a first depth patch having depth values from the depth map for the first 2D image frame, with an associated first viewing angle range that includes the viewing angle at which the first 2D image frame was captured, and a second depth patch having depth values from the depth map for the second 2D image frame, with an associated second viewing angle range that includes the viewing angle at which the second 2D image frame was captured. Additionally or alternatively, the number of depth patches, and the viewing angle range associated with each depth patch may be determined based on a radiance model of the scene (or at least a radiance model of a part of the scene including the virtual object), if available. For instance, in the example shown in Fig. 3, a first depth patch may be generated for the first instance 321 of the virtual object, and a second depth patch may be generated for the second instance 322 of the virtual object.

In some examples, a virtual object in a curved non-Lambertian reflecting surface may be represented by a plurality of texture patches as well as a plurality of depth patches. In other words, the at least one texture patch may comprise a plurality of texture patches, each of the plurality of texture patches being associated with a respective one of the plurality of depth patches for the virtual object (and thereby associated with a respective viewing angle range). Whether a single texture patch is generated for the virtual object (or a single texture patch for each region of the virtual object) or a plurality of texture patches are generated for different viewing angle ranges may depend on an amount of variation in the texture of the virtual object across the range of viewing angles covered by the set of 2D image frames. For instance, if a difference in color values for the virtual object between the first 2D image frame and the second 2D image frame is greater than a predetermined color difference threshold, a plurality of texture patches may be generated for the virtual object, with a first texture patch generated based on the first image frame and a second texture patch generated based on the second image frame. Additionally or alternatively, whether different texture patches are generated for difference viewing angle ranges may be determined based on a radiance model of the scene (or at least a radiance model of a part of the scene including the virtual object), if available.

At step 180, the texture and depth patches (i.e. the one or more texture patches and one or more depth patches for each region that does not contain a non-Lambertian reflecting surface, the one or more texture patches and one or more depth patches for any identified non-Lambertian reflecting surface, and the at least one texture patch and at least one depth patch for each virtual object in any identified non-Lambertian reflecting surface) are encoded into a bitstream. The texture and depth patches may be encoded using any suitable codec.

The texture and depth patches may, for example, be encoded in one or more atlases. For instance, all types of patch may be encoded in the same atlas. Alternatively, separate atlases may be used for texture patches and depth patches, and/or separate atlases may be used for patches for regions that do not contain a non-Lambertian reflecting surface, patches for non-Lambertian reflecting surfaces and patches for virtual objects.

In examples in which a plurality of depth patches (and optionally a plurality of texture patches) are generated for each virtual object in any identified non-Lambertian reflecting surface that is determined to have a non-zero curvature, the method 100 may further comprise encoding, into the bitstream, metadata comprising the viewing angle range associated with each depth patch for each virtual object visible in the reflection of any identified non-Lambertian reflecting surface determined to have a non-zero curvature.

As the skilled person will readily appreciate, metadata encoded in the bitstream may additionally include any other information required for synthesizing a view of the scene from a target viewpoint. For instance, the bitstream may comprise encoded metadata that includes information defining the position and/or orientation of each of the cameras used to obtain the set of 2D image frames.

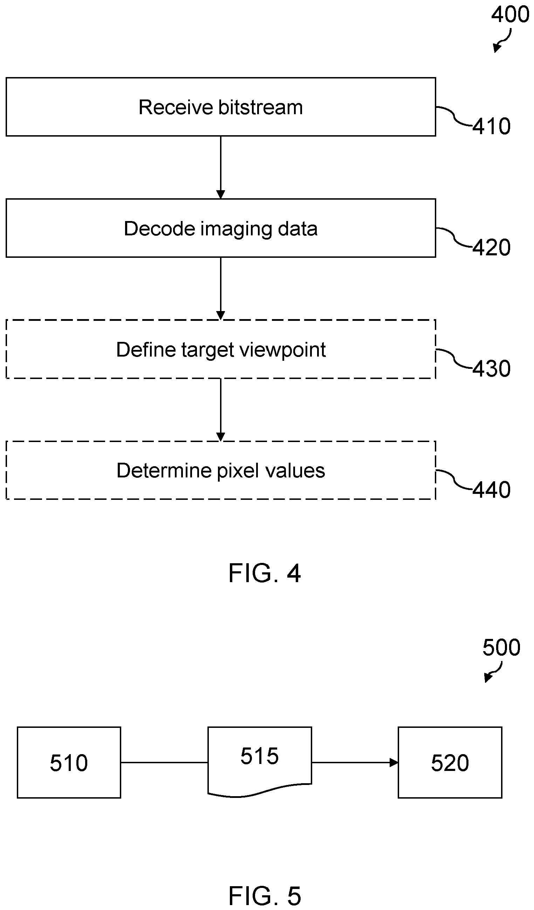

Fig. 4 illustrates a method 400 for decoding 3D imaging data for a scene, according to an embodiment of the invention.

The method 400 begins at step 410, at which a bitstream comprising encoded 3D imaging data for the scene is received. The encoded 3D imaging data comprises one or more texture patches and one or more depth patches for each region in the scene that does not contain a non-Lambertian reflecting surface, one or more texture patches and one or more depth patches for any non-Lambertian reflecting surface in the scene, and at least one texture patch and at least one depth patch for each virtual object in any non-Lambertian reflecting surface. The one or more texture patches for any non-Lambertian reflecting surface and the at least one texture patch for each virtual object each comprise a color value and a density value for each pixel.

In some examples, the bitstream may also comprise encoded metadata. For instance, in some examples, for at least one virtual object, the at least one depth patch may comprise a plurality of depth patches (and optionally a plurality of texture patches, each associated with a respective depth patch), and the bitstream may comprise encoded metadata comprising, for each virtual object for which the at least one depth patch comprises a plurality of depth patches, a viewing angle range associated with each depth patch for the virtual object. The metadata may additionally or alternatively comprise additional information, as described above with respect to Fig. 1.

At step 420, the 3D imaging data is decoded. In examples in which the bitstream also comprises encoded metadata, the method 400 may further comprise a step of decoding the metadata. The 3D imaging data (and, if present, the metadata) may be decoded using any suitable codec.

In some examples, the method 400 further comprises a step 430 of defining a target viewpoint, and a step 440 of processing the decoded 3D imaging data to determine a pixel value for each pixel of an image frame at the target viewpoint. For any region of the image frame at the target viewpoint that does not contain a non-Lambertian reflecting surface, the pixel value for each pixel in the region may be the color value of a pixel in a texture patch that corresponds to the same point in the scene.

For any pixel in the image frame at the target viewpoint that represents a point on a non-Lambertian reflecting surface, the pixel value may be determined by merging a color value for the point on the non-Lambertian reflecting surface and a color value for a point on a virtual object that is visible in the point on the non-Lambertian reflecting surface from the target viewpoint. The color value for the point on the non-Lambertian reflecting surface and the color value for the point on the virtual object may be merged by weighting each color value according to the corresponding density value.

As the skilled person will appreciate, a virtual object reflected in a non-Lambertian reflecting surface will be visible at different points on the non-Lambertian reflecting surface depending on the target viewpoint. The point on the non-Lambertian reflecting surface and the point on a virtual object that are visible in the image frame at the target viewpoint may be identified using the depth values for the non-Lambertian reflecting surface and the depth values for the virtual object(s) visible in the non-Lambertian reflecting surface respectively. In other words, the virtual object is treated as a separate, real object in the scene that is positioned behind the non-Lambertian reflecting surface, and the non-Lambertian reflecting surface is treated as a transparent or semi-transparent surface.

As described above, in some examples, for at least one virtual object, the at least one depth patch may comprise a plurality of depth patches (and optionally a plurality of texture patches, each associated with a respective depth patch), and the bitstream may comprise encoded metadata comprising, for each virtual object for which the at least one depth patch comprises a plurality of depth patches, a viewing angle range associated with each depth patch for the virtual object. In these examples, the depth patch associated with the viewing angle range in which the target viewpoint is found may be selected to provide the depth values for the virtual object when determining the pixel value for each pixel of the image frame at the target viewpoint. In other words, to determine whether the virtual object is visible in the image frame at the target viewpoint, the position of the virtual object with respect to the target viewpoint is determined based on the depth values in the depth patch associated with the viewing angle range in which the target viewpoint is found.

Fig. 5 illustrates a pipeline 500 for transmitting 3D imaging data for a scene. The pipeline comprises an encoder 510 and a decoder 520. The encoder is configured to output a bitstream 515, which is received by the decoder. In Fig. 5, the bitstream 515 is transmitted directly from the encoding apparatus to the decoding apparatus; however, as the skilled person will readily appreciate, the bitstream may alternatively be stored on a suitable storage medium before being transmitted to the decoding apparatus.

The bitstream 515 is, itself, an embodiment of the invention. The bitstream comprises encoded 3D imaging data, comprising one or more texture patches and one or more depth patches for each region in the scene that does not contain a non-Lambertian reflecting surface, one or more texture patches and one or more depth patches for any non-Lambertian reflecting surface in the scene, and at least one texture patch and at least one depth patch for each virtual object in any non-Lambertian reflecting surface. The one or more texture patches for any non-Lambertian reflecting surface and the at least one texture patch for each virtual object each comprise a color value and a density value for each pixel.

In some examples, the bitstream 515 may also comprise encoded metadata. For instance, in some examples, for at least one virtual object, the at least one depth patch may comprise a plurality of depth patches (and optionally a plurality of texture patches, each associated with a respective depth patch), and the bitstream may comprise encoded metadata comprising, for each virtual object for which the at least one depth patch comprises a plurality of depth patches, a viewing angle range associated with each depth patch for the virtual object. The metadata may additionally or alternatively comprise additional information, as described above with respect to Fig. 1.

The encoder 510 may be configured to generate the bitstream 515 using the method 100 described above with reference to Fig. 1. In particular, the encoder 510 is configured to: obtain a set of 2D image frames for a scene, each image frame in the set having been acquired from a different viewpoint; process the set of 2D image frames to generate a depth map for each 2D image frame; identify any virtual objects in the scene; identify, as a non-Lambertian reflecting surface, any surface in the scene in which one or more virtual objects are visible in at least one 2D image in the set; for each region in each of the 2D image frames that does not contain a non-Lambertian reflecting surface, generate one or more texture patches for the region and one or more corresponding depth patches for the region; for any identified non-Lambertian reflecting surface: generate one or more texture patches and one or more depth patches for the non-Lambertian reflecting surface, wherein the one or more texture patches contain a non-viewpoint-dependent appearance of the non-Lambertian reflecting surface and the one or more depth patches contain depth values for the non-Lambertian reflecting surface; for each virtual object that is visible in the non-Lambertian reflecting surface in at least one 2D image in the set, generate at least one texture patch and at least one depth patch for the virtual object, wherein the at least one texture patch contains an appearance of the virtual object and the at least one depth patch contains virtual depth values for the virtual object, wherein the one or more texture patches for the non-Lambertian reflecting surface and the at least one texture patch for each of the one or more virtual object each comprise a color value and a density value for each pixel; and encode, into the bitstream 515, the one or more texture patches and one or more depth patches for each region that does not contain a non-Lambertian reflecting surface, the one or more texture patches and one or more depth patches for any identified non-Lambertian reflecting surface, and the at least one texture patch and at least one depth patch for each virtual object in any identified non-Lambertian reflecting surface.

The decoder 520 is configured to receive and decode the bitstream 515. The decoding apparatus may be configured to decode the apparatus using the method 400 described above with reference to Fig. 4. In particular, the decoder is configured to: receive a bitstream comprising encoded 3D imaging data for a scene, the encoded 3D imaging data comprising: one or more texture patches and one or more depth patches for each region in the scene that does not contain a non-Lambertian reflecting surface; one or more texture patches and one or more depth patches for any non-Lambertian reflecting surface in the scene, and at least one texture patch and at least one depth patch for each virtual object in any non-Lambertian reflecting surface, wherein the one or more texture patches for any non-Lambertian reflecting surface and the at least one texture patch for each virtual object each comprise a color value and a density value for each pixel; and decode the 3D imaging data. In some examples, the decoder may be further configured to define a target viewpoint, and to process the decoded 3D imaging data to determine a pixel value for each pixel of an image frame at the target viewpoint, as described above.

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method (100) for encoding 3D imaging data for a scene, the method comprising:
obtaining a set of 2D image frames for a scene, each image frame in the set having been acquired from a different viewpoint;
processing the set of 2D image frames to generate a depth map for each 2D image frame;
identifying any virtual objects (221, 321, 322) in the scene;
identifying, as a non-Lambertian reflecting surface (210, 310), any surface in the scene in which one or more virtual objects are visible in at least one 2D image frame in the set;
for each region in each of the 2D image frames that does not contain a non-Lambertian reflecting surface, generating one or more texture patches for the region and one or more corresponding depth patches for the region;
for any identified non-Lambertian reflecting surface:
generating one or more texture patches and one or more depth patches for the non-Lambertian reflecting surface, wherein the one or more texture patches contain a non-viewpoint-dependent appearance of the non-Lambertian reflecting surface and the one or more depth patches contain depth values for the non-Lambertian reflecting surface;
for each virtual object that is visible in the non-Lambertian reflecting surface in at least one 2D image frame in the set, generating at least one texture patch and at least one depth patch for the virtual object, wherein the at least one texture patch contains an appearance of the virtual object and the at least one depth patch contains virtual depth values for the virtual object,
wherein the one or more texture patches for the non-Lambertian reflecting surface and the at least one texture patch for each of the one or more virtual object each comprise a color value and a density value for each pixel; and
encoding, into a bitstream (515), the one or more texture patches and one or more depth patches for each region that does not contain a non-Lambertian reflecting surface, the one or more texture patches and one or more depth patches for any identified non-Lambertian reflecting surface, and the at least one texture patch and at least one depth patch for each virtual object in any identified non-Lambertian reflecting surface.

2. The method (100) of claim 1, wherein:
the method further comprises, for any identified non-Lambertian reflecting surface (210, 310), processing a region of the depth map corresponding to the non-Lambertian reflecting surface to determine whether the surface has a non-zero curvature;
for any identified non-Lambertian reflecting surface determined to have a non-zero curvature, the step of generating at least one texture patch and at least one depth patch for each virtual object (321, 322) visible in the non-Lambertian reflecting surface comprises generating at least one texture patch and a plurality of depth patches, each of the plurality of depth patches being associated with a respective viewing angle range; and
the method further comprises encoding, into the bitstream, metadata comprising the viewing angle range associated with each depth patch for each virtual object visible in the reflection of any identified non-Lambertian reflecting surface determined to have a non-zero curvature.

3. The method (100) of claim 2, wherein the at least one texture patch for each virtual object (321, 322) visible in the reflection of any identified non-Lambertian reflecting surface (310) determined to have a non-zero curvature comprises a plurality of texture patches, each of the plurality of texture patches being associated with a respective one of the plurality of depth patches for the virtual object.

4. The method (100) of any of claims 1 to 3, wherein the step of identifying any virtual objects (221, 321, 322) in the scene comprises processing the depth map generated for each 2D image frame to identify any virtual objects in the scene.

5. The method (100) of any of claims 1 to 4, wherein the depth map for each 2D image frame is generated by:
processing the set of 2D image frames to generate a radiance field model for the scene; and
processing the radiance field model to generate the depth map for each 2D image frame.

6. The method (100) of claim 5, wherein the radiance field model is a neural radiance field model.

7. The method (100) of any of claims 1 to 5, wherein each 2D image frame in the set is part of a respective video sequence of the scene.

8. A method (400) for decoding 3D imaging data for a scene, the method comprising:
receiving a bitstream (515) comprising encoded 3D imaging data for a scene, the encoded 3D imaging data comprising:
one or more texture patches and one or more depth patches for each region in the scene that does not contain a non-Lambertian reflecting surface;
one or more texture patches and one or more depth patches for any non-Lambertian reflecting surface (210, 310) in the scene, and
at least one texture patch and at least one depth patch for each virtual object (221, 321, 322) in any non-Lambertian reflecting surface,
wherein the one or more texture patches for any non-Lambertian reflecting surface and the at least one texture patch for each virtual object each comprise a color value and a density value for each pixel; and
decoding the 3D imaging data.

9. The method (400) of claim 8, further comprising:
defining a target viewpoint;
processing the decoded 3D imaging data to determine a pixel value for each pixel of an image frame at the target viewpoint, wherein the pixel value for a pixel representing a point on a non-Lambertian reflecting surface (210, 310) is determined by merging a color value for the point on the non-Lambertian reflecting surface and a color value for a point on a virtual object (221, 321, 322) that is visible in the point on the non-Lambertian reflecting surface from the target viewpoint.

10. The method (400) of claim 9, wherein the color value for the point on the non-Lambertian reflecting surface (210, 310) and the color value for the point on the virtual object (221, 321, 322) are merged by weighing each color value according to the corresponding density value.

11. The method (400) of claim 9 or 10, wherein:
for at least one virtual object (321, 322), the at least one depth patch comprises a plurality of depth patches;
the bitstream (515) further comprises encoded metadata comprising, for each virtual object for which the at least one depth patch comprises a plurality of depth patches, a viewing angle range associated with each depth patch for the virtual object;
the method further comprises decoding the metadata; and
the step of processing the decoded 3D imaging data to determine a pixel value for each pixel of an image frame at the target viewpoint comprises, for each virtual object for which the at least one depth patch comprises a plurality of depth patches, selecting one of the plurality of depth patches based on the viewing angle range associated with each depth patch.

12. A computer program product comprising computer program code means which, when executed on a computing device having a processing system, cause the processing system to perform all of the steps of the method (100, 400) according to any one of claims 1 to 11.

13. An encoder (510) for encoding 3D imaging data for a scene, the encoder being configured to:
obtain a set of 2D image frames for a scene, each image frame in the set having been acquired from a different viewpoint;
process the set of 2D image frames to generate a depth map for each 2D image frame;
identify any virtual objects (221, 321, 322) in the scene;
identify, as a non-Lambertian reflecting surface (210, 310), any surface in the scene in which one or more virtual objects are visible in at least one 2D image in the set;
for each region in each of the 2D image frames that does not contain a non-Lambertian reflecting surface, generate one or more texture patches for the region and one or more corresponding depth patches for the region;
for any identified non-Lambertian reflecting surface:
generate one or more texture patches and one or more depth patches for the non-Lambertian reflecting surface, wherein the one or more texture patches contain a non-viewpoint-dependent appearance of the non-Lambertian reflecting surface and the one or more depth patches contain depth values for the non-Lambertian reflecting surface;
for each virtual object that is visible in the non-Lambertian reflecting surface in at least one 2D image in the set, generate at least one texture patch and at least one depth patch for the virtual object, wherein the at least one texture patch contains an appearance of the virtual object and the at least one depth patch contains virtual depth values for the virtual object,
wherein the one or more texture patches for the non-Lambertian reflecting surface and the at least one texture patch for each of the one or more virtual object each comprise a color value and a density value for each pixel; and
encode, into a bitstream (515), the one or more texture patches and one or more depth patches for each region that does not contain a non-Lambertian reflecting surface, the one or more texture patches and one or more depth patches for any identified non-Lambertian reflecting surface, and the at least one texture patch and at least one depth patch for each virtual object in any identified non-Lambertian reflecting surface.

14. A decoder (520) for decoding 3D imaging data for a scene, the decoder being configured to:
receive a bitstream (515) comprising encoded 3D imaging data for a scene, the encoded 3D imaging data comprising:
one or more texture patches and one or more depth patches for each region in the scene that does not contain a non-Lambertian reflecting surface;
one or more texture patches and one or more depth patches for any non-Lambertian reflecting surface (210, 310) in the scene, and
at least one texture patch and at least one depth patch for each virtual object (221, 321, 322) in any non-Lambertian reflecting surface,
wherein the one or more texture patches for any non-Lambertian reflecting surface and the at least one texture patch for each virtual object each comprise a color value and a density value for each pixel; and
decode the 3D imaging data.

15. A bitstream (515) comprising encoded 3D imaging data for a scene, the encoded 3D imaging data comprising:
one or more texture patches and one or more depth patches for each region in the scene that does not contain a non-Lambertian reflecting surface;
one or more texture patches and one or more depth patches for any non-Lambertian reflecting surface (210, 310) in the scene, and
at least one texture patch and at least one depth patch for each virtual object (221, 321, 322) in any non-Lambertian reflecting surface,
wherein the one or more texture patches for any non-Lambertian reflecting surface and the at least one texture patch for each virtual object each comprise a color value and a density value for each pixel.
